# EUROPÄISCHE PATENTSCHRIFT

(11) **EP 2 030 301 B1**
(45) Veröffentlichungstag und Bekanntmachung des Hinweises auf die Patenterteilung: **17.07.2013**
(21) Anmeldenummer: 07725044.7
(22) Anmeldetag: 10.05.2007
(51) Int. Cl.: H02J 7/00, H01F 5/04

(54) **ANLAGE ZUR BERÜHRUNGSLOSEN ENERGIEÜBERTRAGUNG**
CONTACTLESS ENERGY TRANSMISSION SYSTEM
INSTALLATION DE TRANSMISSION D'ÉNERGIE SANS CONTACT

(30) Priorität: 30.05.2006 DE 102006025457; 23.03.2007 DE 102007014712
(43) Veröffentlichungstag der Anmeldung: 04.03.2009
(73) Patentinhaber: SEW-EURODRIVE GmbH & Co. KG, 76646 Bruchsal (DE)
(72) Erfinder: SCHMIDT, Josef, 76676 Graben-Neudorf (DE); HABERMAAS, Martin, 68165 Mannheim (DE); MARKHEISER, Tobias, 74889 Sinsheim, Elsenz (Hilsbach) (DE); PODBIELSKI, Leobald, 76199 Karlsruhe (DE)
(74) Vertreter: Tüngler, Eberhard
(86) Internationale Anmeldenummer: PCT/EP2007/004122
(87) Internationale Veröffentlichungsnummer: WO 2007/137683

(56) Entgegenhaltungen:
- DE-A1- 2 445 143
- DE-A1- 10 312 284
- DE-A1- 19 735 685
- DE-U1- 9 418 594

## Beschreibung

Die Erfindung betrifft eine Anlage.

Aus der DE 44 46 779 C2 und der WO 92/17929 sind Verfahren und zur berührungslosen Energieübertragung bekannt, bei denen eine induktiv schwache Kopplung vorliegt.

Aus der DE 199 29 344 A1 ist eine Wicklung bekannt, die aus mehreren parallelen Leitern aufgebaut ist, welche über Verbindungselemente miteinander verbunden sind.

Aus der DE 103 12 284 B4 ist ein Übertragerkopf bekannt, der eine an einen Primärleiter induktiv koppelbare Sekundärspule umfasst.

Aus der DE 24 451 143 ist ein elektrischer Übertrager bekannt, bei dem ein Bandkabel zur Bildung mindestens zweier Wicklungen verwendet wird.

Aus der US 5,500,632 ist ein Breitband-Audio Übertrager (wide band audio transformer) bekannt.

Der Erfindung liegt die Aufgabe zugrunde, eine Anlage mit geringem Aufwand herstellbar zu machen.

Erfindungsgemäß wird die Aufgabe bei der Anlage nach den in Anspruch 1 angegebenen Merkmalen gelöst.

Wichtige Merkmale der Erfindung bei der Anlage sind, dass sie als Anlage zur berührungslosen Energieübertragung vorgesehen ist,

umfassend zumindest ein Primärleitersystem und
einen zumindest eine an das Primärleitersystem induktiv gekoppelte Sekundärwicklung umfassenden Übertragerkopf,
wobei die Sekundärwicklung wenigstens ein Flachbandkabel umfasst, das mindestens zwei parallel geführte elektrische Leiter aufweist, die voneinander auf Abstand gehalten und gegeneinander isoliert sind,
wobei die Sekundärwicklung aus Teilwicklungen, die jeweils aus einem der elektrischen Leiter gebildet sind, zusammengesetzt ist,
wobei jede der Teilwicklungen mit einer zugehörigen Kapazität einen Reihenschwingkreis bildet, dessen Resonanzfrequenz der Mittelfrequenz des Primärstromes im Wesentlichen entspricht.

Von Vorteil ist dabei, dass eine Spulenwicklung mit vielen Teilwicklungen, welche in Reihe schaltbar sind, ohne großen Aufwand herstellbar ist. Denn es muss die Wicklung nur mit dem Flachbandkabel ausgeführt werden. Für die Herstellung der Teilwicklungen ist kein weiterer Aufwand notwendig. Das Flachbandkabel hält mehrere Leiter auf Abstand und ist durch Umspritzen oder Extrudieren einfach und kostengünstig herstellbar. Das Material des Flachbandkabels ist vorzugsweise aus Kunststoff. Das Wickeln einer Wicklung ist schneller durchführbar, da bei einer Umwicklung alle Leiter des Flachbandes gleichzeitig einmal umwickelt werden und somit reduziert sich der Aufwand beim Wickeln.

Bei einer vorteilhaften Ausgestaltung ist die Spulenwicklung, also Sekundärwicklung, aus zwei oder mehr Flachbandkabeln ausgeführt ist, wobei die von innen nach außen die Flachbandkabel in periodischer Reihenfolge angeordnet sind. Von Vorteil ist dabei, dass eine sehr große Anzahl von Teilwicklungen mit geringem Aufwand herstellbar ist. Außerdem sind die benachbarten Leiter eines Flachbandes axial zueinander benachbart. Jedoch sind die benachbarten Leiter zweier Leiter in verschiedenen Flachbandkabeln sind radial nebeneinander vorsehbar. Somit treten zwischen benachbarten Teilwicklungen nur kleine Spannungen auf.

Bei einer vorteilhaften Ausgestaltung sind die Leiter Litzenleitungen sind, deren einzelne Litzendrähte gegeneinander isoliert. Von Vorteil ist dabei, dass der Skineffekt verringert ist.

Bei einer vorteilhaften Ausgestaltung ist jede Leiter als Teilwicklung der gesamten Spulenwicklung vorgesehen. Von Vorteil ist dabei, dass die Leiter in einem Flachbandkabel zusammengefasst sind und somit die Spulenwicklung, umfassend alle Teilwicklungen, schnell und einfach herstellbar ist.

Bei einer vorteilhaften Ausgestaltung ist Übertragerkopf für eine Anlage zur berührungslosen Energieübertragung vorgesehen, wobei das Gehäuse des Übertragerkopfes eine Sekundärspule samt deren Spulenkern umgibt sowie Kondensatoren zur Bildung einer elektrisch mit der Spule verbundenen Kapazität.

Von Vorteil ist dabei, dass der Übertragerkopf als Einheit montierbar ist und eine gemeinsame Entwärmung der Bauteile vorsehbar ist. Außerdem ist nur ein Gehäuse für alle Bauteile notwendig und diese sind kompakt anordenbar und isolierbar. Weiter wesentlicher Vorteil ist aber auch, dass die auftretenden großen Spannungen, insbesondere beim Reihenschwingkreis, oder großen Ströme, insbesondere beim Parallelschwingkreis, einfach beherrschbar sind und es vermieden wird lange elektrische Leitungen zwischen der Induktivität und der Kapazität zu verlegen, was aufwendig und kostspielig wäre sowie erhöhte Abstrahlungen und Verluste zur Folge hätte. Außerdem wird zum Verbraucher hin nur eine Anschlussleitung vorgesehen, die den Verbraucherstrom und die Verbraucherspannung übertragen muss. Höhere Ströme oder Spannungen, die nur innerhalb oder wegen des parallelen oder seriellen Schwingkreises auftreten, bleiben räumlich innerhalb des Übertragerkopfes. Somit sind die zugehörigen technischen Mittel, wie Stromschienen für Starkstrom und/oder Isoliermittel für hohe Spannungen, innerhalb des Übertragerkopfes, also auf räumlich eng begrenztem Bereich angeordnet. Somit sind die Mittel kompakt ausführbar. Außerdem ist das Gehäuse des Übertragerkopfes zur Isolierung und als Berührschutz mit verwendbar. Des Weiteren ist die Verdrahtung, also die elektrischen Verbindungen und Verbindungsstellen, mit Ausnahme der Anschlussleitung vorsehbar auf diesem räumlich eng begrenzten Gebiet.

Bei einer vorteilhaften Ausgestaltung sind im Übertragerkopf zumindest eine Induktivität und Kapazität als Schwingkreis, insbesondere Parallel- oder Reihen-Schwingkreis, vorgesehen, wobei die Resonanzfrequenz der Mittelfrequenz des Primärstromes im Wesentlichen entspricht. Von Vorteil ist dabei, dass die elektromagnetischen Abstrahlungen und der Aufwand für elektrische Verbindungen verringerbar ist.

Bei einer vorteilhaften Ausgestaltung ist das Gehäuse aus Gehäuseteilen zusammengesetzt, insbesondere dicht, lösbar verbindbar und/oder in hoher Schutzart. Von Vorteil ist dabei, dass der Übertragerkopf auch in feuchter Umgebung oder nasser Umgebung oder sogar Wasser-Umgebung einsetzbar ist. Durch Vergussmasse innerhalb des Übertragekropfes lässt sich eine noch höhere Dichtigkeit und bessere mechanische Stabilität erreichen.

Bei einer vorteilhaften Ausgestaltung ist der Spulenkern aus Ferrit ausgeführt, insbesondere aus einer Vielzahl von Ferritteilen zusammengesetzt ist, insbesondere gleichen Ferritteilen. Von Vorteil ist dabei, dass verschiedene Spulenkerne aus stets denselben Teilen herstellbar sind.. Es ist also eine ganze Baureihe von Spulenkernen oder entsprechend Übertragerköpfen herstellbar, wobei nur eine oder wenige Sorten von teilen bevorratet werden muss. Die somit hohe erreichbare Varianz innerhalb eines solchen Baukastens benötigt trotzdem nur ein geringes Lagervolumen und entsprechend geringen Aufwand und Kostenbedarf.

Bei einer vorteilhaften Ausgestaltung sind eine, zwei oder mehr Sorten von Ferritteilen verwendet innerhalb des Gehäuses. Von Vorteil ist dabei, dass eine hohe Varianz im Baukasten unter geringem Aufwand herstellbar ist.

Bei einer vorteilhaften Ausgestaltung umfasst der Übertragerkopf eine elektrische Verbindung zu einem Verbraucher, welcher aus dem Übertragerkopf mit Energie versorgbar ist. Von Vorteil ist dabei, dass nur eine einzige Anschlussleitung nach außen zum Verbraucher hin notwendig ist. Somit sind die weiter notwendigen Verbindungsmittel und Verbindungen innerhalb des Übertragerkopfes vorsehbar und mit der Vergussmasse und/oder dem Gehäuse schützbar, isolierbar und mechanisch festlegbar.

Bei einer vorteilhaften Ausgestaltung sind Kondensatoren auf mindestens einer Leiterplatte angeordnet, deren Leiterbahnen elektrisch mit der Sekundärspule verbunden sind. Von Vorteil ist dabei, dass die Verbindungen in einfacher und kostengünstiger Weise herstellbar sind.

Bei einer vorteilhaften Ausgestaltung umgeben die Spulenwicklung oder Spulenwicklungen den Spulenkern und an der äußeren Oberfläche der Spule sind Ferritplatten vorgesehen. Von Vorteil ist dabei, dass eine Verminderung des Streufeldes und somit eine Verbesserung des Wirkungsgrades erreichbar ist.

Bei einer vorteilhaften Ausgestaltung ist der Spulenkern U-förmig, C-förmig oder E-förmig ausgeführt, insbesondere mit an ihrem Ende verbreiterten Schenkeln des U, E oder C. Von Vorteil ist dabei, dass die Erfindung bei verschieden ausführbaren Spulenkernen und somit auch bei verschiedenen Arten der Anordnung der Primärleiter, wie sie beispielhaft in der DE 44 46 779 C2 und der WO 92/17929 gezeigt sind, anwendbar ist. Bei der ersteren ist ein Hinleiter ungefähr im Inneren des U vorgesehen. Bei einem E-förmigen Kern ist im Beriech der ersten beiden Schenkel ein Hinleiter und im Bereich der letzten beiden Schenkel ein Rückleiter vorsehbar.

Bei einer vorteilhaften Ausgestaltung ist zwischen Leiterplatte und Spulenkern ein Isolierkörper vorgesehen. Von Vorteil ist dabei, dass eine räumlich sehr kompakte Anordnung ausführbar ist.

Bei einer vorteilhaften Ausgestaltung ist die Sekundärspule aus Teilwicklungen zusammengesetzt, welche jeweils mit einer zugehörigen Kapazität als Reihenschwingkreis ausgeführt sind, wobei die Resonanzfrequenz der Mittelfrequenz des Primärstromes im Wesentlichen entspricht. Von Vorteil ist dabei, dass bei dem Reihen-Schwingkreis die auftretenden Spannungen reduzierbar sind im Vergleich zur Ausführung des Übertragerkopfes mit nur einer einzigen Induktivität und einer einzigen Kapazität. Bei analoger Ausführung mit Parallelschwingkreis, der aus parallel geschaltete Schwingkreise aus jeweiligen Teilwicklungen und zugehörigen, entsprechend abgestimmten Kapazitäten zusammengesetzt ist, lassen sich entsprechend Ströme reduzieren.

Bei einer vorteilhaften Ausgestaltung umfasst der Übertragerkopf eine Reihenschaltung der Reihenschwingkreise, umfassend jeweilige Teilwicklung und jeweils zugehörige Kapazität. Von Vorteil ist dabei, dass die auftretenden Spannungen innerhalb des Übertragerkopfes reduzierbar sind und somit eine einfachere Isolierung ausführbar ist.

Bei einer vorteilhaften Ausgestaltung umfasst der Übertragerkopf eine Reihenschaltung der Reihenschwingkreisen, umfassend Teilwicklung und jeweils zugehörige Kapazität. Von Vorteil ist dabei, dass die im Übertragerkopf auftretenden Spannungen, insbesondere an den Wicklungsabgriffen, klein haltbar sind.

Bei einer vorteilhaften Ausgestaltung ist die Spulenwicklung als Flachwicklung ausgeführt. Von Vorteil ist dabei, dass der Übertragerkopf besonders kompakt ausführbar ist.

Bei einer vorteilhaften Ausgestaltung ist das Gehäuse als Metall, insbesondere Aluminium, ausgeführt. Von Vorteil ist dabei, dass Streufelder beziehungsweise Wirbelstromverluste gering haltbar sind. Außerdem wird die Wärmeaufspreizung verbessert, also die von der Spule erzeugte Wärme schneller auf dem Gehäuse verteilt und somit die Spitzentemperatur am Gehäuse verringert. Das Metall bewirkt des Weiteren eine Verbesserung der Abschirmung von aus dem Übertragerkopf austretenden magnetischen Streufeldern. Somit ist sogar eine Montage des Übertragerkopfes auf Stahl ermöglicht.

Bei einer vorteilhaften Ausgestaltung ist im Inneren des Übertragerkopfes Vergussmasse vorgesehen. Von Vorteil ist dabei, dass elektrische Isolierung, mechanische Haltekraft, Stabilität gegen Schwingungsneigung und die Wärmeableitung an die Umgebung verbesserbar ist.

Bei einer vorteilhaften Ausgestaltung sind die Leitungen des Flachbandkabels der Spulenwicklung jeweils als Litzen ausgeführt, wobei die einzelnen Litzendrähte gegeneinander isoliert sind, insbesondere wobei das Flachbandkabel ein spiralförmig oder rechteck-spiralförmig aufgewickeltes Flachbandkabel ist. Von Vorteil ist dabei, dass HF-Litze kostengünstig erhältlich ist und die Auswirkungen des Skin-Effektes verringerbar sind. Somit sind auch bei Frequenzen des Wechselstromes zwischen 10 und 100 kHz hohe Wirkungsgrade erreichbar.

Bei einer vorteilhaften Ausgestaltung ist jeder Teilwicklung eine zugeordnete Kapazität in Reihe nachgeschaltet, welcher wiederum eine andere Teilwicklung in Reihe nachgeschaltet ist, wobei die Teilwicklungen in räumlicher Nähe angeordnet sind, insbesondere benachbart. Von Vorteil ist dabei, dass räumlich benachbarte Teilwicklungen eine geringe Spannungsdifferenz zueinander aufweisen. Somit sind die Anforderungen an Isolierabstand zwischen diesen benachbarten Teilwicklungen gering.

Bei einer vorteilhaften Ausgestaltung ist jeder Teilwicklung eine zugeordnete Kapazität in Reihe geschaltet, welcher wiederum eine andere Teilwicklung in Reihe nachgeschaltet ist, wobei die erste Teilwicklung einem ersten Flachbandkabel und die andere Teilwicklung einem anderen Flachbandkabel zugeordnet ist. Von Vorteil ist dabei, dass die beiden Flachbandkabel miteinander aufwickelbar sind zur Bildung der Spule. Außerdem hat jedes Flachbandkabel ein Ende und einen Anfang. Vorteil ist dabei, dass eine Vielzahl von Teilwicklungen schnell und einfach mit einer Vielzahl von Kapazitäten und diese wiederum mit einer Vielzahl weiterer Teilwicklungen verbindbar sind, indem ein Ende des ersten und ein Anfang des anderen Flachbandkabels auf eine Leiterplatte geführt und elektrisch verbunden wird. Somit ist eine umfangreiche Reihenschaltung einer Vielzahl von Induktivitäten und Kapazitäten schnell und einfach herstellbar.

Wichtige Merkmale bei der Anlage sind, dass ein vorbeschriebener Übertragerkopf entlang eines langgestreckten Primärleiters verfahrbar vorgesehen ist. Von Vorteil ist dabei, dass eine besonders kompakte Anlage vorsehbar ist, bei der aus einer Einspeisung ein Primärleitersystem speisbar ist, aus dem bewegbar angeordnete Verbraucher berührungslos über eine schwache induktive Kopplung, also auch großen Luftspalt, versorgbar ist.

Bei einer vorteilhaften Ausgestaltung ist der Übertragerkopf entlang eines langgestreckten Primärleiters verfahrbar vorgesehen. Von Vorteil ist dabei, dass Energie an einen bewegbar angeordneten Verbraucher übertragbar ist, also beispielsweise einen elektrischen Antrieb eines Fahrzeuges.

Bei einer vorteilhaften Ausgestaltung weisen die Primärleiter in Richtung der Achse der Spulenwicklung einen Abstand zum Spulenkern auf, der kleiner ist als der Abstand zweier Schenkel des Spulenkerns zueinander. Von Vorteil ist dabei, dass ein hoher Wirkungsgrad erzielbar ist, obwohl die Primärleiter in einer ersten Ebene angeordnet sind, beispielsweise im Boden verlegt sind; und der Übertragerkopf über dieser Ebene ungestört verfahrbar ist.

Bei einer vorteilhaften Ausgestaltung ist ein Schnitt des Spulenkerns derart E-förmig, dass ein Mittelschenkel und zwei äußere Schenkel an in einer Ebene angeordneten Rückenteilen vorgesehen ist, insbesondere wobei die Normalenrichtung der Schnittebene in Richtung der langgestreckten Primärleiter verläuft. Von Vorteil ist dabei, dass die Primärleiter jeweils im Bereich zwischen dem äußeren und mittleren Schenkel vorsehbar sind, wobei allerdings der Primärleiter einen Abstand von den Schenkeln aufweist und der Abstand zwischen Primärleiter und dem die Schenkel verbindenden Teil größer ist als jede Schenkellänge. Bei einem E-förmigen Spulenkern ist das Teil dabei das Rückenteil des E.

Weitere Vorteile ergeben sich aus den Unteransprüchen.

**Bezugszeichenliste**

| | |
|---|---|
| 1 | Gehäuse |
| 5 | Leiterplatte |
| 6 | Kondensatoren |
| 7 | Dichtung |
| 8 | Gehäuseplatte |
| 10 | Anschlussleitung |
| 11 | Ferritplatte |
| 12 | Ferritteil |
| 13 | Ferritplatte |
| 14 | Ferritteil |
| 15 | Ferritplatte |
| 20 | Wicklung aus Litzen-Flachband |
| 21 | seitliche Ferritplatten |
| 31 | erste Leiterplatte |
| 32 | zweite Leiterplatte |
| 41 | Flachbandkabel mit zugehörigen Streckeninduktivitäten der umfassten Litzenleitungsabschnitte |
| 42 | Flachbandkabel mit zugehörigen Streckeninduktivitäten der umfassten Litzenleitungsabschnitte |
| 301 | Klemmenleiste |
| 302 | Klemmenleiste |
| 303 | Klemmenleiste |
| 304 | Klemmenleiste |
| | |
| Band 1 | Flachbandkabel |
| Band 2 | Flachbandkabel |

Die Erfindung wird nun anhand von Abbildungen näher erläutert:

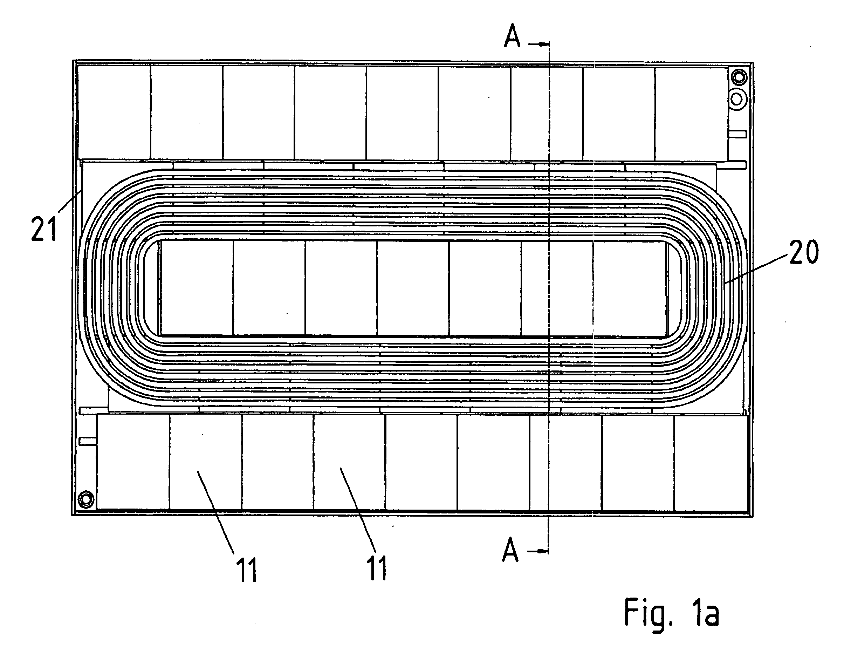

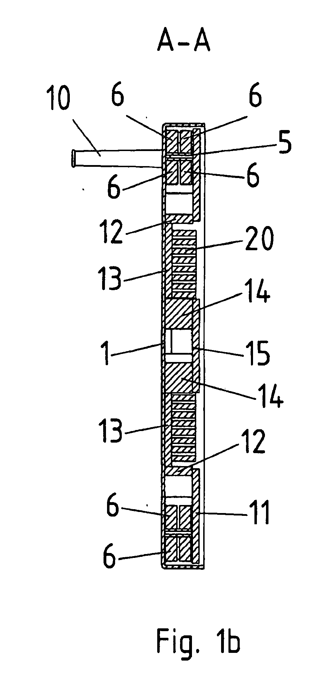

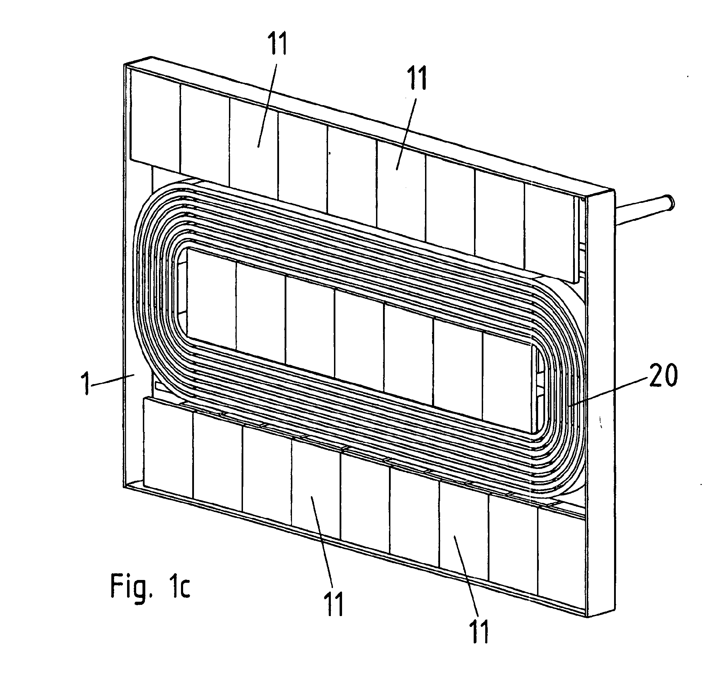

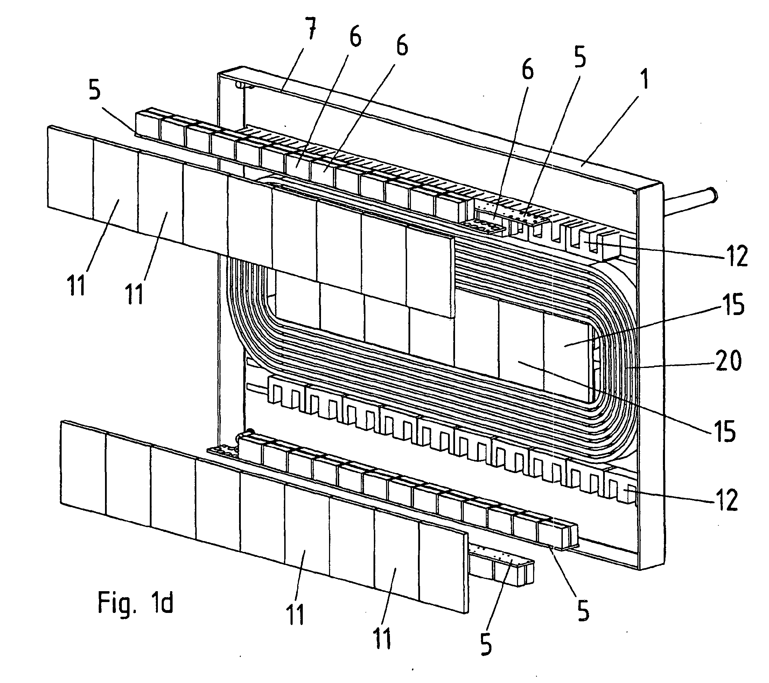

In der Figur 1 a ist eine erfindungsgemäße Vorrichtung in Draufsicht, in Figur 1 b im Schnitt in Figur 1c in Schrägansicht und in Figur 1d in Explosionsdarstellung gezeichnet.

Dabei handelt es sich um einen sogenannten Übertragerkopf, der beispielhaft an einem Verbraucher anbringbar ist. Der Verbraucher ist längs einem Primärleiter bewegbar angeordnet, wobei von einer Einspeisung in den Primärleiter ein mittelfrequenter Wechselstrom eingeprägt wird. Die Einspeisung ist vorzugsweise als Stromquelle ausgeführt.

Im Übertragerkopf ist die zugehörige Sekundärwicklung, welche induktiv an den Primärleiter koppelbar ist, vorgesehen. Die Kopplung ist schwach, also über einen großen Luftspalt, ausgeführt. Damit aber trotzdem ein hoher Wirkungsgrad beim berührungslosen Übertragen der elektrischen Leistung vom Primärleitersystem an die Sekundärwicklung erfolgen kann, ist der Sekundärwicklung eine Kapazität derart in Serie beschaltet, dass der zugehörige Schwingkreis eine Resonanzfrequenz aufweist, die im Wesentlichen der Mittelfrequenz entspricht.

Der Übertragerkopf weist ein Gehäuse 1 auf, das vorzugsweise aus Metall, wie Aluminium ausgeführt ist. Dieses umgibt den im Wesentlichen E-förmigen Spulenkern und die diesen umgebende Sekundärwicklung 20, welche nur symbolisch dargestellt ist. Der Spulenkern ist aus Ferritplatten (11,21) und Ferritteilen zusammengesetzt. Dabei lässt sich die ungefähre Form des Spulenkerns als E beschreiben, dessen Mittelschenkel nicht verbreitert ist. Jedoch sind die äußeren beiden Schenkel an ihrem Ende verbreitert, indem Ferritplatten 11 am Ende der Schenkel aufgelegt sind. Die äußeren Schenkel sind dabei aus Ferritteilen 12 ausgeführt. Der Mittelschenkel ist durch zwei Ferritteile 14 und eine darauf vorgesehene Ferritplatte ausgeführt.

Am seitlichen Ende des Gehäuses 1 sind an der Innenseite Ferritplatten 21 angebracht, die zur Reduzierung der Streufelder vorgesehen sind und den Wirkungsgrad weiter verbessert.

Die gesamte Anordnung aus Ferritkernen, Ferritteilen und Wicklung 20 ist innerhalb des Gehäuses 1 vorgesehen. Zwischen den mit Kondensatoren 6 bestückten Leiterplatten 5 ist eine Isolierung vorgesehen, die in der Figur nicht gezeigt ist. Auf den Leiterplatten 5 sind Kondensatoren 6 vorgesehen, die die genannte Kapazität bilden, welche der Induktivität der Sekundärspule beziehungsweise ihren Teilwicklungen jeweils in Reihe geschaltet ist.

Dabei sind entsprechend den Figuren mehrere Leiterplatte im Inneren vorgesehen. Insbesondere sind diese parallel zueinander angeordnet. Vorteilhaft hat es sich erwiesen, entlang zweier Innenseiten jeweils zwei Leiterplatten anzuordnen, wobei die Kondensatoren voneinander abgewandt angeordnet sind.

Mittels der Dichtung 7 ist eine Gehäuseplatte unter Verwendung von Schrauben auf das Gehäuse 1 aufschraubbar und dicht verbindbar. Das Innere wird zuvor mit Vergussmasse vergossen, wodurch die Wärmeleitung und Isolierung verbesserbar sind.

Am Gehäuse 1 ist auch eine Durchführung der Anschlussleitung 10 vorgesehen. Somit ist ein Verbraucher, wie Elektromotor oder elektronische Schaltung, versorgbar.

Der im Schnitt E-förmige Spulenkern ist aus einer Vielzahl kleiner Ferritplatten und Ferritteilen zusammengesetzt. Somit ist die Fertigung verschiedener geometrischer Dimensionen und Ausformungen einfach, kostengünstig und schnell möglich.

Bei weiteren Ausführungsbeispielen ist die Kapazität parallel statt in Reihe zur Induktivität der Sekundärspule ausgeführt.

Die Wicklung ist aus Hf-Litze hergestellt, also aus Litze, deren sich gegenseitig berührende Einzeldrähte gegeneinander elektrisch isoliert sind, beispielsweise durch Aufbringen eines Lacks. Somit sind die Verluste verringert.

Außerdem ist die Litze als Flachband ausgeführt. Somit eine hoher Wirkungsgrad auf kompaktem Raumbereich erreichbar.

In den Figuren 1a bis 1d ist die Wicklung 20 nur symbolisch eingezeichnet. Bei der vorteilhaften erfindungsgemäßen Ausführung ist die Wicklung 20 als Flachwicklung, also als ebene konzentrische Wicklung ausgeführt. Dabei verläuft die Wicklung 20 insgesamt rechteck-spiralförmig oder oval-spiralförmig. Das heißt, das Flachband wird in ungefährer Rechteckform oder Ovalform in einer Ebene gewickelt. Somit wird Bauraum eingespart. Dabei umfasst das Flachband der Wicklung 20 mehrere parallel zueinander und elektrisch isoliert zueinander vorgesehene Leiter. Das Trägermaterial des Flachbandes hält die Leiter auf zueinander konstantem Abstand.

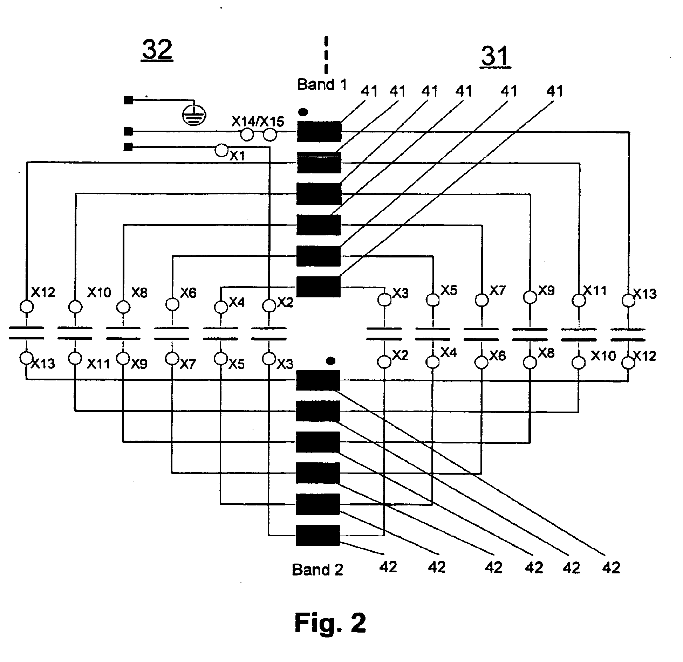

Das Flachband ist also insgesamt gesehen als Spirale aufgewickelt. Die Enden der umfassten elektrischen Leiter sind auf eine Klemmenleiste geführt. Die elektrische Verschaltung der Leiter ist der Figur 2 entnehmbar.

Das Aluminiumgehäuse verringert die Verluste und verbessert somit den Wirkungsgrad der Anlage.

Das Primärleitersystem umfasst zumindest einen langgestreckten Hinleiter und Rückleiter, die zu einer geschlossenen Schleife des Primärleitersystems gehören. Beide liegen außerhalb des Übertragekropfes, also insbesondere außerhalb des E-förmigen Spulenkerns. Die beiden Leiter sind dabei in Richtung der längeren Seite des rechteckförmigen Übertragerkopfes nach Figur 1 a verlegt. Der Übertragerkopf wird mit einem Gewissen Abstand in Linienrichtung entlang dieser Leiter geführt. Dabei ist der Übertragerkopf einem schienengebundenen Wagen oder einem Wagen ohne Schienenbindung zugeordnet. Im letzteren Fall hat sich als vorteilhaft erwiesen, den Wagen mit einer Spurführungsantenne auszustatten, die den Wagen in Linienrichtung zu führen vermag.

In Draufsicht gesehen, also in Blickrichtung gemäß Figur 1a, ist der Hinleiter zwischen dem mittleren Schenkel und einem äußeren Schenkel des E-förmigen Spulenkerns vorgesehen. Der Rückleiter ist zwischen dem mittleren Schenkel und dem anderen äußeren Schenkel des E-förmigen Spulenkerns vorgesehen. Wie oben erwähnt, ist jedoch in Blickrichtung zwischen dem Spulenkern und dem Hinleiter und Rückleiter ein Abstand vorgesehen. Dieser Abstand ist jedoch kleiner als der Schenkelabstand, also der Abstand vom mittleren zum äußeren Schenkel des E.

Bei weiteren erfindungsgemäßen Ausführungsbeispielen ist die Wicklung 20 der Sekundärspule aus Teilwicklungen (41,42) zusammengesetzt, wobei jeder Teilwicklung (41,42) eine Kapazität in Serie nachgeschaltet ist zur Reduzierung der auftretenden Spitzenspannung an den Sekundärspulenanschlüssen, also auch in der Anschlussleitung 10. Somit fließt der Sekundärstrom über die erste Teilwicklung 41 und dann in die zugeordnete erste Kapazität. Danach fließt er über die zweite Teilwicklung 42 und dann in die zugeordnete zweite Kapazität. Dies wird bis zu letzten Kapazität fortgesetzt. Jede Induktivität und die zugeordnete Kapazität sind dabei derart dimensioniert, dass die zugehörige Resonanzfrequenz im Wesentlichen der Mittelfrequenz entspricht. Die Leiterplatten sind besonders gut geeignet, um die Verbindungen zwischen den Teilwicklungen und den Kondensatoren auszuführen in einfacher und kostengünstiger Weise. Jede Teilwicklung ist hierbei eine Flachwicklung.

Bei weiteren erfindungsgemäßen Ausführungsbeispielen ist eine der Kapazitäten oder die Kapazität durch Reihen- und/oder Parallelschaltung mehrerer Kondensatoren realisiert.

Bei weiteren erfindungsgemäßen Ausführungsbeispielen ist statt des im Wesentlichen E-förmigen Spulenkerns auch ein U-förmiger oder ein C-förmiger oder ein anders geformter Ferritkem verwendbar.

In Figur 2 sind die Streckeninduktivitäten der Teilwicklungen (41,42) als symbolische Darstellung der Teilwicklungen (41,42) dargestellt und mit den entsprechenden Bezugsziffern (41,42) bezeichnet.

Die Sekundärwicklung 20 ist aus einem Flachband hergestellt, wobei das Flachband sechs nebeneinander angeordnete Litzenleitungen, die als Teilwicklungen (41,42) bezeichenbar sind, umfasst. Insbesondere sind die Litzenleitungen derart parallel zueinander im Flachband gehalten und vorgesehen, dass der Abstand in Querrichtung zur Leitungsrichtung zueinander konstant ist. Dabei ist das Halten durch einen isolierenden Kunststoff ausgeführt, der beispielhaft mittels Umspritzen oder Extrudieren die Litzenleitungen umgebend herstellbar ist. Außerdem wird das Flachband (Band 1 der Figur 2) zusammen mit einem weiteren Flachband (Band 2 der Figur 2), das ebenfalls sechs nebeneinander angeordnete Litzenleitungen umfasst, zusammen bewickelt. Die beiden Flachbänder (Band 1, Band 2) sind also sozusagen aufeinander derart gestapelt, dass nach dem Bewickeln von innen nach außen die beiden Flachbänder in abwechselnder Reihenfolge vorgesehen sind. Das Flachband (Band 1 der Figur 2) umfasst die Leiter 41 als Teilwicklungen. Das Flachband (Band 2 der Figur 2) umfasst die Leiter 42 als Teilwicklungen.

Wie aus der Figur 2 hierzu skizziert ist, wird jede Litzenleitung in jedem Flachband (Band 1, Band 2 der Figur 2) für eine Teilwicklung (41,42) vorgesehen, wobei die jeweilige Litzenleitung mit ihrer zugehörigen Streckeninduktivität in Figur 2 symbolisch dargestellt ist. Dabei ist zwischen der Induktivität jeder Teilwicklung (41,42) eine jeweilige Kapazität in Reihe beschaltet, wie oben erwähnt. Somit ist ein Schwingkreis aus Kondensatoren und Litzenleitungen aufbaubar, ohne dass zusätzliche Induktivitäten vorgesehen werden müssten. Oberhalb der Kondensatoren ist in Figur 2 also das Flachband als Band 1 mittels seiner Litzenleitungsabschnittinduktivitäten 41 angedeutet, unterhalb ist das Flachband als Band 2 mittels seiner Litzenleitungsabschnittinduktivitäten 42 angedeutet.

Einer ersten Teilwicklung 41 mit einer ersten Litzenleitung im ersten Flachband (Band 1 der Figur 2) - dargestellt durch die Litzenleitungsabschnitte mit zugehörigen Streckeninduktivitäten 41 - wird dabei ein Kondensator nachgeschaltet, dem eine erste Teilwicklung 42 mit einer ersten Litzenleitung im zweiten Flachband folgt. Der dieser Teilwicklung nachgeschalteten Kapazität wird dabei die zweite Teilwicklung, welche mit der zweiten Litzenleitung ausgeführt ist, im ersten Flachband (Band 2 in Figur 2) nachgeschaltet. Der darauf folgenden Kapazität wird dann wiederum die zweite Teilwicklung, welche mit der zweiten Litzenleitung ausgeführt ist, im zweiten Flachband (Band 2 in Figur 2) nachgeschaltet. Dies wird auf diese Weise weitergeführt. Dabei ist die Reihenfolge der Litzenleitungen derart gewählt und angeordnet, dass die aufeinander nachfolgenden Teilwicklungen räumlich benachbart sind. Somit sind die Spannungsdifferenzen erniedrigt. Außerdem sind ohne Aufwand Spulenwicklungen realisierbar, bei denen viele Teilwicklungen vorgesehen sind.

Ein weiterer Vorteil der Wicklungsart nach Figur 2 ist, dass ein erstes Ende des ersten Flachbandkabels (Band 1 in Figur 2), auf einer ersten Leiterplatte 31 an Leiterbahnen derselben elektrisch anschließbar ist. Auf derselben Leiterplatte 31 ist ein erstes Ende des zweiten Flachbandkabels (Band 2 in Figur 2) anschließbar. Zwischen den jeweiligen Enden sind somit ein erster Satz von Kondensatoren anschließbar.

Analog sind die beiden anderen Enden der beiden Flachbandkabel (Band 1 und Band 2 in Figur 2) auf einer zweiten Leiterplatte 32 mit einem zweiten Satz von Kondensatoren angeschlossen.

Insgesamt ist also das Flachbandkabel als Flachwicklung gewickelt. Somit liegen die im Flachband zusammengehaltenen Leiter parallel übereinander, wobei die Breite der Wicklung in dieser Richtung im Wesentlichen von der Breite des Flachbandes bestimmt ist.

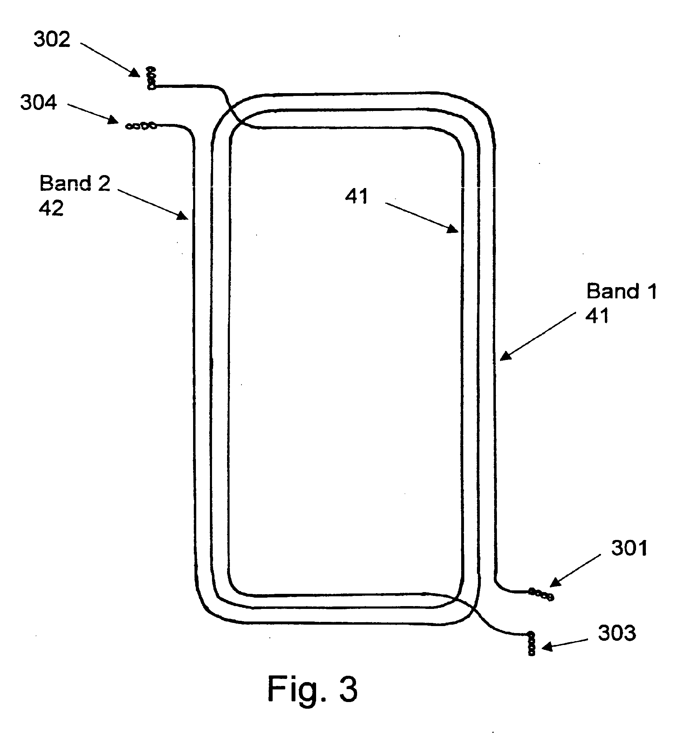

Die in den Figuren 1 a bis 1 d nur symbolisch gezeigte Wicklung 20 und in der Figur 2 nur schaltungstechnisch mit Induktivitäten dargestellte Wicklung 20 ist in Figur 3 näher erläutert für eine beispielhafte Windungszahl 3/2.

Die Enden der parallelen Leiter 41 des Flachbandes Band 1 sind an ihrem jeweiligen ersten Ende mit einer Klemmleiste 301 und an ihrem anderen Ende mit einer Klemmleiste 302 verbunden. Die Klemmenleiste umfasst Anschlussvorrichtungen für jeden Leiter des jeweiligen Flachbandes, so dass dieser jeweilige Leiter mit einer ihm zugeordneten Kapazität verbunden ist. Ebenso sind die Enden der Leiter des Flachbandes Band 2 mit den Klemmenleisten 303 und 304 verbunden.

Die Klemmenleisten 301 und 303 sind der ersten Leiterplatte 31 zugeordnet und auf ihr vorgesehen.

Die Klemmenleisten 302 und 304 sind der zweiten Leiterplatte 32 zugeordnet und auf ihr vorgesehen.

Bei weiteren erfindungsgemäßen Ausführungsbeispielen haben sich andere Windungszahlen statt 3/2 herausgestellt, insbesondere 11/2, 13/2 oder sogar 15/2. Dies gilt insbesondere für Primärleiterströme zwischen 10 und 100 Ampere und einer von der Wicklung abzunehmende maximale Leistung zwischen 300 Watt und 3kW.

## Patentansprüche

1. Anlage zur berührungslosen Energieübertragung,
umfassend zumindest ein Primärleitersystem und
einen zumindest eine an das Primärleitersystem induktiv gekoppelte Sekundärwicklung umfassenden Übertragerkopf,
**dadurch gekennzeichnet, dass**
die Sekundärwicklung wenigstens ein Flachbandkabel (20) umfasst, das mindestens zwei parallel geführte elektrische Leiter aufweist, die voneinander auf Abstand gehalten und gegeneinander isoliert sind,
wobei die Sekundärwicklung aus Teilwicklungen (41, 42), die jeweils aus einem der elektrischen Leiter gebildet sind, zusammengesetzt ist,
wobei jede der Teilwicklungen (41,42) mit einer zugehörigen Kapazität(6) einen Reihenschwingkreis bildet, dessen Resonanzfrequenz der Mittelfrequenz des Primärstromes im Wesentlichen entspricht.

2. Anlage nach mindestens einem der vorangegangenen Ansprüche,
**dadurch gekennzeichnet, dass**
**die Reihenschwingkreise als vom Übertragerkopf umfasste Reihenschaltung vorgesehen sind.**

3. Anlage nach mindestens einem der vorangegangenen Ansprüche,
**dadurch gekennzeichnet, dass**
die Sekundärwicklung aus zwei oder mehr Flachbandkabeln (20) ausgeführt ist, wobei die Flachbandkabel von innen nach außen in periodischer Reihenfolge abwechselnd angeordnet sind. -

4. Anlage nach mindestens einem der vorangegangenen Ansprüche,
**dadurch gekennzeichnet, dass**
die elektrischen Leiter Litzenleitungen sind, deren einzelne Litzendrähte gegeneinander isoliert sind.

5. Anlage nach mindestens einem der vorangegangenen Ansprüche,
**dadurch gekennzeichnet, dass**
die Sekundärwicklung samt deren Spulenkern (11-15) sowie die Kondensatoren (6) zur Bildung einer elektrisch mit der Sekundärwicklung verbundenen Kapazität von einem Gehäuse (1) umgeben sind.

6. Anlage nach Anspruch 5,
**dadurch gekennzeichnet, dass**
das Gehäuse aus Gehäuseteilen (8) zusammengesetzt ist, insbesondere dicht, lösbar verbindbar und/oder in hoher Schutzart,
und/oder dass
der Spulenkern aus Ferrit ausgeführt ist, insbesondere aus einer Vielzahl von Ferritteilen (11,12,13,14, 15) zusammengesetzt ist, insbesondere gleichen Ferritteilen (13,15), insbesondere wobei eine, zwei oder mehr Sorten von Ferritteilen (11,12,13,14, 15) verwendet sind, insbesondere klebend miteinander verbundene Ferritteile.

7. Anlage nach mindestens einem der vorangegangenen Ansprüche,
**dadurch gekennzeichnet, dass**
der Übertragerkopf eine elektrische Verbindung (10) zu einem Verbraucher umfasst, welcher aus dem Übertragerkopf mit Energie versorgbar ist,
und/oder dass
die Kondensatoren (6) auf mindestens einer Leiterplatte (5) angeordnet sind, deren Leiterbahnen elektrisch mit der Sekundärwicklung verbunden sind,
und/oder dass
die Sekundärwicklung den Spulenkern umgeben und an der äußeren Oberfläche der Sekundärwicklung Ferritplatten (11) zur Verminderung des Streufeldes vorgesehen sind,
und/oder dass
der Spulenkern U-förmig, C-förmig oder E-förmig ausgeführt ist, insbesondere mit an ihrem Ende verbreiterten Schenkeln des U, E oder C.

8. Anlage nach mindestens einem der Ansprüche 5 bis 7,
**dadurch gekennzeichnet, dass**
zwischen den Leiterplatten (5) und/oder zwischen den Leiterplatten (5) und dem Spulenkern Isolierkörper vorgesehen sind.

9. Anlage nach mindestens einem der Ansprüche 5 bis 8,
**dadurch gekennzeichnet, dass**
das Gehäuse (1) als Metall, insbesondere Aluminium, ausgeführt ist.

10. Anlage nach mindestens einem der Ansprüche 5 bis 9,
**dadurch gekennzeichnet, dass**
im Inneren des Gehäuses (1) Vergussmasse vorgesehen ist.

11. Anlage nach mindestens einem der vorangegangenen Ansprüche,
**dadurch gekennzeichnet, dass**
das wenigstens eine Flachbandkabel (20) spiralförmig oder rechteck-spiralförmig aufgewickelt ist.

12. Anlage nach mindestens einem der vorangegangenen Ansprüche,
**dadurch gekennzeichnet, dass**
jeder, einer ersten Teilwicklung (41) zugeordneten Kapazität (6) eine andere Teilwicklung (42) in Reihe nachgeschaltet ist, wobei die Teilwicklungen (41,42) in räumlicher Nähe zueinander angeordnet sind, insbesondere benachbart.

13. Anlage nach mindestens einem der Ansprüche 1 bis 11,
**dadurch gekennzeichnet, dass**
jeder, einer ersten Teilwicklung (41) zugeordneten Kapazität eine andere Teilwicklung (42) in Reihe nachgeschaltet ist, wobei die erste Teilwicklung (41) einem ersten Flachbandkabel (20) und die andere Teilwicklung (42) einem anderen Flachbandkabel (20) zugeordnet ist.

14. Anlage nach mindestens einem der vorangegangenen Ansprüche,
**dadurch gekennzeichnet, dass**
der Übertragerkopf entlang eines langgestreckten Primärleiters, insbesondere Hinleiter und Rückleiter, verfahrbar vorgesehen ist.

15. Anlage nach Anspruch 14,
**dadurch gekennzeichnet, dass**
die Primärleiter in Richtung der Achse der Sekundärwicklung einen Abstand zum Spulenkern (11-15) aufweisen, der kleiner ist als der Abstand zweier Schenkel (12,14) des Spulenkerns zueinander,
und/oder dass
ein Schnitt des Spulenkerns derart E-förmig ist, dass ein Mittelschenkel (14) und zwei äußere Schenkel (12) an in einer Ebene angeordneten Rückenteilen (13) vorgesehen ist, insbesondere wobei die Normalenrichtung der Schnittebene des Spulenkerns (11-15) in Richtung der langgestreckten Primärleiter verläuft.

## Claims

1. Installation for contactless energy transfer,
comprising at least one primary conductor system and a pick-up comprising at least one secondary winding inductively coupled to the primary conductor system,
**characterised in that**
the secondary winding comprises at least one flat ribbon cable (20) which
has at least two electrical conductors extending in a parallel manner, held at a distance from each other, and insulated with respect to each other,
the secondary winding being composed of part windings (41, 42), each formed from one of the electrical conductors,
each of the part windings (41, 42), together with an associated capacitance (6), forming a series resonant circuit whose resonant frequency substantially corresponds to the medium frequency of the primary current.

2. Installation according to at least one of the preceding claims,
**characterised in that**
the series resonant circuits are provided as a series connection included in the pick-up.

3. Installation according to at least one of the preceding claims,
**characterised in that**
the secondary winding is formed from two or more flat ribbon cables (20), the flat ribbon cables being disposed in a manner alternating in periodic sequence from inside to outside.

4. Installation according to at least one of the preceding claims,
**characterised in that**
the electrical conductors are litz-wire lines whose individual stranded wires are insulated with respect to each other.

5. Installation according to at least one of the preceding claims,
**characterised in that**
the secondary winding, together with its coil core (11-15) as well as the capacitors (6) for forming a capacitance connected electrically to the secondary winding, are surrounded by a housing (1).

6. Installation according to Claim 5,
**characterised in that**
the housing is assembled from housing parts (8), in particular in a manner that is impervious, detachably connectable and/or provides a high degree of protection,
and/or **in that**
the coil core is formed of ferrite, in particular is assembled from a multiplicity of ferrite parts (11, 12, 13, 14, 15), in particular identical ferrite parts (13, 15),
in particular one, two or more kinds of ferrite parts (11, 12, 13, 14, 15) being used, in particular ferrite parts adhesively joined together.

7. Installation according to at least one of the preceding claims, **characterised in that**
the pick-up comprises an electrical connection (10) to a load that is suppliable with energy from the pick-up,
and/or **in that**
the capacitors (6) are disposed on at least one printed circuit board (5) having printed circuit traces electrically connected to the secondary winding,
and/or **in that**
the secondary winding surround the coil core, and ferrite plates (11) for reducing the stray field are provided at the outer surface of the secondary winding,
and/or **in that**
the coil core is of U-shaped, C-shaped or E-shaped form, in particular with limbs of the U, E or C that are widened at their end.

8. Installation according to at least one of Claims 5 to 7,
**characterised in that**
insulating bodies are provided between the printed circuit boards (5) and/or between the printed circuit boards (5) and the coil core.

9. Installation according to at least one of Claims 5 to 8,
**characterised in that**
the housing (1) is formed of metal, in particular aluminium.

10. Installation according to at least one of Claims 5 to 9,
**characterised in that**
potting compound is provided in the interior of the housing (1).

11. Installation according to at least one of the preceding claims,
**characterised in that**
the at least one flat ribbon cable (20) is wound up in a spiral shape or a rectangular-spiral shape.

12. Installation according to at least one of the preceding claims,
**characterised in that**
to each capacitance (6) assigned to a first part winding (41), another part winding (42) is connected in series, the part windings (41, 42) being disposed in spatial proximity, in particular adjacent, to each other.

13. Installation according to at least one of Claims 1 to 11,
**characterised in that**
to each capacitance assigned to a first part winding (41), another part winding (42) is connected in series, the first part winding (41) being assigned to a first flat ribbon cable (20) and the other part winding (42) being assigned to another flat ribbon cable (20).

14. Installation according to at least one of the preceding claims,
**characterised in that**
the pick-up is provided so as to be able to travel along an elongated primary conductor, in particular outgoing conductor and return conductor.

15. Installation according to Claim 14,
**characterised in that**
the primary conductors in the direction of the axis of the secondary winding have a distance to a coil core (11-15) that is smaller than the distance of two limbs (12, 14) of the coil core to each other,
and/or **in that**
a section of the coil core is E-shaped such that a middle limb (14) and two outer limbs (12) are provided on back parts (13) disposed in one plane,
in particular the direction of the normal of the sectional plane of the coil core (11-15) extending in the direction of the elongated primary conductors.

## Revendications

1. Installation de transmission d'énergie sans contact,
comprenant au moins un système de conducteurs primaires et
une tête de transmission comprenant au moins un enroulement secondaire couplé par induction au système de conducteurs primaires,
**caractérisée en ce que**
l'enroulement secondaire comprend au moins un câble plat (20) qui présente au moins deux conducteurs électriques menés en parallèle qui sont maintenus à distance l'un de l'autre et isolés l'un par rapport à l'autre,
l'enroulement secondaire étant composé d'enroulements partiels (41, 42) qui sont formés chaque fois d'un des conducteurs électriques,
chacun des enroulements partiels (41, 42) formant avec une capacité (6) associée un circuit oscillant série dont la fréquence de résonance correspond sensiblement à la fréquence centrale du courant primaire.

2. Installation selon au moins une des revendications précédentes,
**caractérisée en ce que**
les circuits oscillants série sont prévus sous la forme d'un circuit série compris par la tête de transmission.

3. Installation selon au moins une des revendications précédentes,
**caractérisée en ce que**
l'enroulement secondaire est formé de au moins deux ou plus câbles plats (20), les câbles plats étant disposés alternativement en succession périodique de l'intérieur vers l'extérieur.

4. Installation selon au moins une des revendications précédentes,
**caractérisée en ce que**
les conducteurs électriques sont des câbles multi-brins dont les brins individuels sont isolés les uns par rapport aux autres.

5. Installation selon au moins une des revendications précédentes,
**caractérisée en ce que**
l'enroulement secondaire avec son noyau de bobine (11-15) ainsi que les condensateurs (6) servant à former une capacité reliée électriquement à l'enroulement secondaire sont entourés par un boîtier (1).

6. Installation selon la revendication 5,
**caractérisée en ce que**
le boîtier est composé de parties de boîtier (8) pouvant en particulier être assemblées de manière étanche, détachable et/ou avec un degré de protection élevé,
et/ou que
le noyau de bobine est réalisé en ferrite, en particulier à partir d'une pluralité de pièces en ferrite (11, 12, 13, 14, 15), en particulier de pièces en ferrite identiques (13, 15),
en particulier une, deux ou plus sortes de pièces en ferrite (11, 12, 13, 14, 15) étant utilisées, en particulier des pièces en ferrite reliées entre elles par collage.

7. Installation selon au moins une des revendications précédentes,
**caractérisée en ce que**
la tête de transmission comprend une liaison électrique (10) avec un consommateur, lequel peut être alimenté en énergie par la tête de transmission,
et/ou que
les condensateurs (6) sont disposés sur au moins une carte de circuit imprimé (5) dont les pistes conductrices sont reliées électriquement à l'enroulement secondaire,
et/ou que
l'enroulement secondaire entoure le noyau de bobine et des plaques en ferrite (11) servant à réduire le champ de fuite sont prévues sur la surface extérieure de l'enroulement secondaire,
et/ou que
le noyau de bobine est réalisé en forme de U, de C ou de E, en particulier avec des branches du U, du E ou du C élargies à leur extrémité.

8. Installation selon au moins une des revendications 5 à 7,
**caractérisée en ce que**
des corps isolants sont prévus entre les cartes de circuit imprimé (5) et/ou entre les cartes de circuit imprimé (5) et le noyau de bobine.

9. Installation selon au moins une des revendications 5 à 8,
**caractérisée en ce que**
le boîtier (1) est réalisé en métal, en particulier en aluminium.

10. Installation selon au moins une des revendications 5 à 9,
**caractérisée en ce que**
qu'une masse de scellement est prévue à l'intérieur du boîtier (1).

11. Installation selon au moins une des revendications précédentes,
**caractérisée en ce que**
ledit au moins un câble plat (20) est enroulé en spirale ou en spirale carrée.

12. Installation selon au moins une des revendications précédentes,
**caractérisée en ce que**
un autre enroulement partiel (42) est branché en série après chaque capacité (6) associée à un premier enroulement partiel (41), les enroulements partiels (41, 42) étant disposés à proximité spatiale l'un de l'autre, en particulier étant adjacents.

13. Installation selon au moins une des revendications 1 à 11,
**caractérisée en ce que**
un autre enroulement partiel (42) est branché en série après chaque capacité (6) associée à un premier enroulement partiel (41), le premier enroulement partiel (41) étant associé à un premier câble plat (20) et l'autre enroulement partiel (42) à un autre câble plat (20).

14. Installation selon au moins une des revendications précédentes,
**caractérisée en ce que**
la tête de transmission est prévue déplaçable le long d'un conducteur primaire allongé, en particulier un conducteur aller et un conducteur retour.

15. Installation selon la revendication 14,
**caractérisée en ce que**
les conducteurs primaires présentent, dans la direction de l'axe de l'enroulement secondaire, une distance au noyau de bobine (11-15) qui est plus petite que la distance de deux branches (12, 14) du noyau de bobine entre elles,
et/ou que
une coupe du noyau de bobine est en forme de E de telle façon qu'une branche centrale (14) et deux branches extérieures (12) soient prévues sur des pièces dorsales (13) disposées dans un plan, en particulier la direction normale au plan de coupe du noyau de bobine (11-15) s'étendant dans la direction des conducteurs primaires allongés.
